# EUROPÄISCHE PATENTSCHRIFT

(11) **EP 3 578 046 B1**
(45) Veröffentlichungstag und Bekanntmachung des Hinweises auf die Patenterteilung: **11.11.2020**
(21) Anmeldenummer: 19156424.4
(22) Anmeldetag: 11.02.2019
(51) Int. Cl.: A01M 7/00

(54) **VORRICHTUNG ZUR VERMEIDUNG VON SPRÜHNEBELABDRIFT UND/ODER ZUM AUFFANGEN UND RECYCELN VON PFLANZENSCHUTZBRÜHE**
DEVICE FOR AVOIDING SPRAY DRIFT AND/OR FOR COLLECTING AND RECYCLING CROP PROTECTION BROTH
DISPOSITIF PERMETTANT D'ÉVITER DES PERTES PAR DISPERSION ET/OU PERMETTANT DE RÉCUPÉRER ET DE RECYCLER LA BOUILLIE DE PROTECTION DE PLANTES

(30) Priorität: 08.06.2018 EP 18176733
(43) Veröffentlichungstag der Anmeldung: 11.12.2019
(73) Patentinhaber: OWT GmbH & Co KG, 8152 Stallhofen (AT)
(72) Erfinder: Lind, Christoph, 5671 Bruck an der Glocknerstraße (AT); Lind, Karl, 8200 Gleisdorf (AT)
(74) Vertreter: Röggla, Harald

(56) Entgegenhaltungen:
- FR-A1- 2 951 656
- FR-A1- 3 001 159
- US-A- 4 274 589
- US-A- 4 982 898
- US-A- 5 897 057
- US-B1- 6 302 332

## Beschreibung

Die Erfindung betrifft eine Vorrichtung zur Vermeidung von Sprühnebelabdrift gemäß dem Oberbegriff des Anspruchs 1.

Auf dem Gebiet der modernen Landwirtschaft erfordert die erwerbsmäßige Produktion von Früchten und die Pflege von Kultur- und Nutzpflanzen einen Schutz der Pflanzen vor Krankheiten und Schädlingen. Zu diesem Zweck werden Pflanzenschutzmittel eingesetzt, welche auf die Pflanzen angewendet werden. Ohne einen zusätzlichen Pflanzenschutz sind sowohl die erzielten Erntemengen als auch die Qualität der produzierten landwirtschaftlichen Produkte starken witterungsbedingten Schwankungen unterworfen. Dies gilt sowohl für die konventionelle Landwirtschaft als auch die biologische Landwirtschaft, wobei biologische Anbauformen eine wesentlich intensivere Anwendung von natürlichen, nicht synthetisierten, Pflanzenschutzmitteln erfordern.

Die Ausbringung von Pflanzenschutzmitteln erfolgt in der Regel mit Sprühgeräten. Am Markt sind Sprühgeräte unterschiedlicher Ausführungsformen, von kleinen handgetragenen Geräten über spezifisch für diesen Anwendungszweck konstruierten, fahr- oder ziehbaren bis hin zu selbst angetriebenen Maschinen verfügbar. Im Speziellen auf dem Gebiet des Obst- und Weinbaus werden Pflanzenschutzmittel in der Regel mit Sprühgeräten ausgebracht, welche an einem landwirtschaftlichen Fahrzeug, typischerweise einem Traktor, angebracht, oder von diesem nachgezogen werden. Derartige Sprühgeräte erzeugen aus dem Pflanzenschutzmittel bzw. der Pflanzenschutzbrühe einen Sprühnebel, welcher auf die Pflanzen aufgesprüht wird. Hierbei wird der Sprühnebel in der Regel im Wesentlichen normal auf eine Fortbewegungsrichtung des Sprühgeräts beziehungsweise des Fahrzeuges ausgestoßen. Allerdings bleibt nur ein Teil der Pflanzenschutzbrühe auf den zu behandelnden Pflanzen zurück, da ein Großteil des Sprühnebels durch unvermeidbare Luftbewegungen beziehungsweise Windeinwirkungen abdriftet. Hierdurch wird ein großer Anteil der eingesetzten Pflanzenschutzbrühe verschwendet. Dies führt außerdem dazu, dass sich Pflanzenschutzbrühe auf Pflanzen in der Umgebung, beispielsweise auf Nachbargrundstücken, absetzt, welche nicht für eine Behandlung mit Pflanzenschutzbrühe vorgesehen sind. Das Weiteren entstehen hierdurch potentielle Gesundheitsrisiken für Menschen und Tiere, welche sich in der Nähe von besprühten Pflanzen aufhalten und hohen Konzentrationen des eingesetzten Pflanzenschutzmittels ausgesetzt werden. Dies ist insbesondere beim Einsatz von synthetischen Pestiziden aufgrund von mit diesen Substanzen verbundenen Gesundheitsrisiken zu vermeiden. In Folge dessen ist insbesondere im Umfeld von Wohnsiedlungen oder öffentlichen Einrichtungen eine Ausbringung von Pflanzenschutzmitteln mit herkömmlichen Sprühgeräten problematisch. Des Weiteren eignen sich herkömmliche Sprühgeräte nur zur Besprühung jeweils einer Seite von zwei angrenzenden Pflanzenreihen, wodurch jede Pflanzenreihe zumindest zweimal mit einem herkömmlichen Sprühgerät behandelt werden muss. Dies führt dazu, dass das Ausbringen von Pflanzenschutzbrühe mit einem hohen Zeitaufwand verbunden ist, und die Menge an verschwendeter Pflanzenschutzbrühe zusätzlich erhöht wird. Zum Stand der Technik auf dem Gebiet der Sprühgeräte gehören bspw die folgenden Dokumente: FR 3 001 159, US 5 897 057, US 6 302 332, FR 2 951 656.

Zur Behebung dieser Nachteile sind sogenannte Tunnelsprühgeräte bekannt, welche die zu behandelnden Pflanzen in einem Sprühtunnel umschließen, in welchem die Pflanzenschutzbrühe aufgebracht wird. Hierdurch wird ein Abdriften des Sprühnebels effektiv verhindert, und die Pflanzen werden von zwei Seiten gleichzeitig besprüht. Des Weiteren setzt sich überschüssiger Sprühnebel in Form von flüssiger Pflanzenschutzbrühe an den Wänden bzw. Auffangschirmen des Sprühtunnels ab und kann in weiterer Folge wiederverwendet werden. Hierdurch erhöht sich die Ausbeute der eingesetzten Pflanzenschutzbrühe. Nachteile derartiger Tunnelsprühgeräte resultieren aus der Komplexität ihres Aufbaus und dem sich daraus ergebenden Platzbedarf, ihrem Gewicht und den Konstruktions- bzw. Beschaffungskosten. Das hohe Gewicht derartiger Vorrichtungen verursacht beispielsweise eine unerwünschte Bodenverdichtung zwischen den behandelten Pflanzen, welche deren Wachstum und in weiterer Folge den Ertrag negativ beeinflusst. Des Weiteren ergibt sich durch die großen Abmessungen von Tunnelsprühgeräten ein erhöhter Platzbedarf, insbesondere für Wendemanöver. Hierdurch eignen sind derartige Tunnelsprühgeräte nicht für den Einsatz in schwerem Gelände, wie beispielsweise auf Weingärten in Hanglage. Darüber hinaus ist eine Anschaffung eines Tunnelsprühgerätes für kleinere landwirtschaftliche Betriebe oftmals wirtschaftlich nicht sinnvoll, sodass diese auf herkömmliche Sprühgeräte mit einem hohen Verbrauch an Pflanzenschutzmitteln und den weiteren mit diesen Systemen einhergehenden Nachteilen zurückgreifen. Manche Tunnelsprühgeräte weisen zur Reduktion des Platzbedarfs bei Wendemanövern einen Hebe- und/oder Kippmechanismus auf, welcher mit den Auffangschirmen des Sprühtunnels verbunden ist. Dieser stellt die Funktion bereit, die Auffangschirme für ein Wendemanöver über die Bewuchshöhe der Pflanzen anzuheben oder zu kippen, wodurch ein kleinerer Wenderadius erreicht wird. Derartige Kippmechanismen weisen jedoch den Nachteil auf, dass hierdurch das Gewicht von Tunnelsprühgeräten weiter erhöht wird. Zudem erhöhen diese zusätzlich die Konstruktions- bzw. die Beschaffungskosten der Tunnelsprühgeräte. Aufgrund des hohen Gewichts und Platzbedarfs von Tunnelsprühgeräten ist deren Einsatzgebiet im Wesentlichen auf ebene Lagen beschränkt.

Das Dokument FR 3 001 159 B1 offenbart ein Tunnelsprühgerät mit einem Sprühtunnel, welches im Vergleich zu herkömmlichen Tunnelsprühgeräten ein reduziertes Gewicht aufweist. Die Auffangschirme des Sprühtunnels des Tunnelsprühgeräts sind mit einer Tragestruktur verbunden, welche zumindest teilweise aus einer Aufblasstruktur besteht. Hierdurch wird ein Teil der in der Regel aus Metall gefertigten Struktur des Tunnelsprühgeräts durch eine leichtere alternative Konstruktion ersetzt. Dies führt zu einer Reduktion des Gewichts des Tunnelsprühgerätes im Vergleich zu herkömmlichen Tunnelsprühgeräten.

Das in Dokument FR 3 001 159 B1 offenbarte Tunnelsprühgerät weist den bekannten Nachteil auf, dass insbesondere bei Wendemanövern ein hoher Platzbedarf besteht und es sich hierdurch schlecht für die Anwendung in schwerem Gelände oder bei beengten Platzverhältnissen eignet. Ein zusätzlicher Kippmechanismus würde das Gewicht der Vorrichtung wiederum erhöhen.

Das Dokument US 6,302,332 B1 offenbart ein Sprühgerät mit einer Tragestruktur, einer Aufblasstruktur und Sprühdüsen, welche an der Aufblasstruktur vorgesehen sind. Die Tragestruktur ist aus Metall gefertigt, und die Aufblasstruktur ist starr an der Tragestruktur befestigt. Das in US 6,302,332 B1 offenbarte Sprühgerät weist ebenfalls die Nachteile eines hohen Platzbedarfs und einer daraus folgenden schlechten Eignung für Anwendungen im Gelände auf.

Es ist die Aufgabe der vorliegenden Erfindung eine Vorrichtung zur Vermeidung von Sprühnebelabdrift und/oder zum Auffangen und Recyceln von Pflanzenschutzbrühe zu bilden, welche die Nachteile des Standes der Technik vermeidet.

Erfindungsgemäß wird die vorliegende Aufgabe durch eine Vorrichtung mit den Merkmalen von Anspruch 1 gelöst.

Die erfindungsgemäße Vorrichtung zur Vermeidung von Sprühnebelabdrift und/oder zum Auffangen und Recyceln von Pflanzenschutzbrühe umfasst eine Tragestruktur, einen mit der Tragestruktur verbundenen Auffangschirm zum Auffangen von Pflanzenschutzbrühe und/oder mit der Tragstruktur verbundene Sprühdüsen zum Sprühen von Planzenschutzbrühe. Die Tragestruktur besteht zumindest teilweise aus einer Aufblasstruktur, und der Auffangschirm und/oder die Sprühdüsen sind an der Aufblasstruktur befestigt. An der Aufblasstruktur können ein Auffangschirm, eine oder mehrere Sprühdüsen oder sowohl ein Auffangschirm als auch eine oder mehrere Sprühdüsen vorgesehen sein. Hierdurch wird der Vorteil erreicht, dass das Gewicht der Vorrichtung im Vergleich zu herkömmlichen Vorrichtungen wesentlich verringert wird. Die erfindungsgemäße Vorrichtung weist des Weiteren ein Gelenk auf. Der Auffangschirm und/oder die Sprühdüsen sind von dem Gelenk zwischen einer Auffangbetriebslage zum Auffangen der Pflanzenschutzbrühe beziehungsweise einer Sprühbetriebslage zum Sprühen der Pflanzenschutzbrühe und einer Wendebetriebslage mit zur Auffangbetriebslage angehobenem Auffangschirm, beziehungsweise zur Sprühbetriebslage angehobenen Sprühdüsen schwenkbar gelagert. Besonders vorteilhaft ist, dass durch das Gelenk unterschiedliche Schwenkwinkel bereitgestellt werden, um die Vorrichtung an unterschiedliche Geländegegebenheiten und Bewuchshöhen anzupassen. Hierdurch eignet sich die erfindungsgemäße Vorrichtung sowohl für den Einsatz in schwierigem Gelände oder Steillagen mit beschränkten Platzverhältnissen für Wendemanöver, wie beispielsweise in Weinkulturen, als auch für Obstbaumplantagen in der Ebene. Zudem kann die erfindungsgemäße Vorrichtung in Verbindung mit bestehenden herkömmlichen Sprühgeräten eingesetzt werden. Sie eignet sich somit insbesondere als Ersatz für kostspielige Tunnelsprühgeräte. Besonders vorteilhaft ist, dass hierdurch die Sprühnebelabdrift von herkömmlichen Sprühgeräten wesentlich verringert werden kann, oder bei einer Ausführung der erfindungsgemäßen Vorrichtung mit Sprühdüsen die notwendige Arbeitszeit zur Besprühung einer Nutzpflanzenkultur wesentlich reduziert werden kann. Des Weiteren erweitert die erfindungsgemäße Vorrichtung das Einsatzgebiet von herkömmlichen Sprühgeräten, durch die Möglichkeit der Reduzierung der Sprühnebelabdrift und/oder der verringerten notwendigen Arbeitszeit, auf sensible Gebiete, wie beispielsweise in der Nähe von Siedlungen. Des Weiteren reduziert die erfindungsgemäße Vorrichtung den Bodeneintrag von Pflanzenschutzmitteln, wodurch die Grundwasserbelastung reduziert wird. Durch das geringere Gewicht der Vorrichtung im Vergleich zu Vorrichtungen aus dem Stand der Technik wird zudem der Vorteil erreicht, dass die Bodenverdichtung reduziert wird.

Vorteilhafte Ausgestaltungen der erfindungsgemäßen Vorrichtung, sowie alternative Ausführungsvarianten werden in weiterer Folge anhand der Figuren näher erläutert.
Figur 1a zeigt eine erfindungsgemäße Vorrichtung zur Vermeidung von Sprühnebelabdrift und/oder zum Auffangen und Recyceln von Pflanzenschutzbrühe mit einem Auffangschirm in einer schematischen Seitenansicht gemäß einer ersten Ausführungsvariante mit einem pneumatischen Gelenk.
Figur 1b zeigt eine zweite Ausführungsvariante der erfindungsgemäßen Vorrichtung in einer perspektivischen Ansicht mit einem mechanischen Gelenk.
Figur 2 zeigt die erfindungsgemäße Vorrichtung gemäß Figur 1a in einer schematischen Grundrissansicht, wobei Auffangsstruktur und Hebestruktur nur einseitig abgebildet sind.
Figur 3 zeigt zwei gegenüberliegende erfindungsgemäße Vorrichtungen in einer Ansicht von Hinten mit einem Sprühgerät, und zwei Auffangschirmen mit Sprühdüsen.
Figur 4a zeigt die erfindungsgemäßen Vorrichtungen aus Figur 3 mit einem Auffangschirm in zwei verschiedenen Betriebsvarianten einer Wendebetriebslage und einem Auffangschirm und Sprühdüsen in einer Auffangbetriebslage beziehungsweise Sprühbetriebslage.
Figur 4b zeigt die erfindungsgemäße Vorrichtung aus Figur 1b in der Wendebetriebslage.
Figur 5 zeigt eine alternative Ausführungsvariante der erfindungsgemäßen Vorrichtung mit einem Auffangschirm und Sprühdüsen.
Figur 6 zeigt ein landwirtschaftliches Fahrzeug in einer Seitenansicht mit einem Sprühgerät, und der erfindungsgemäßen Vorrichtung.

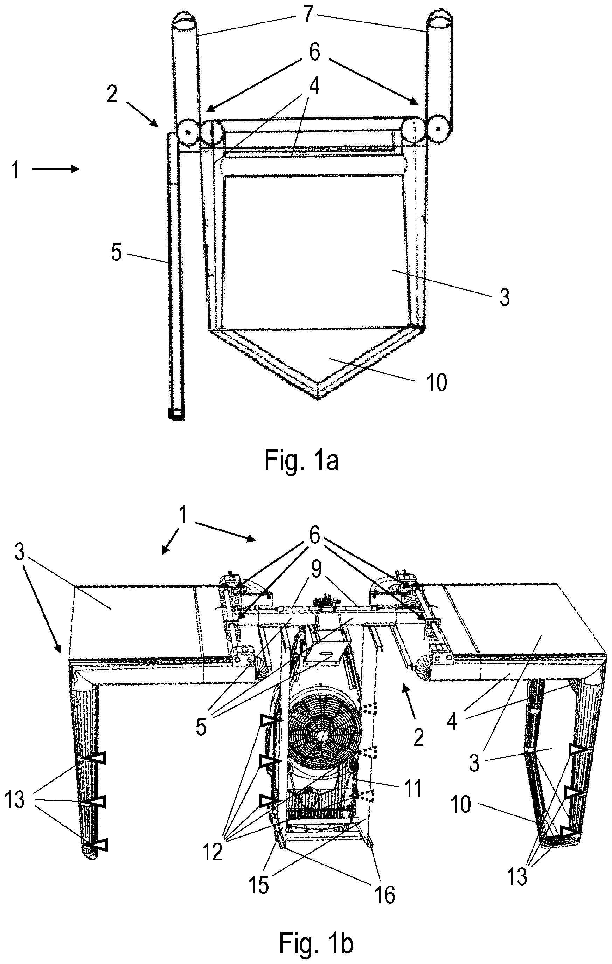

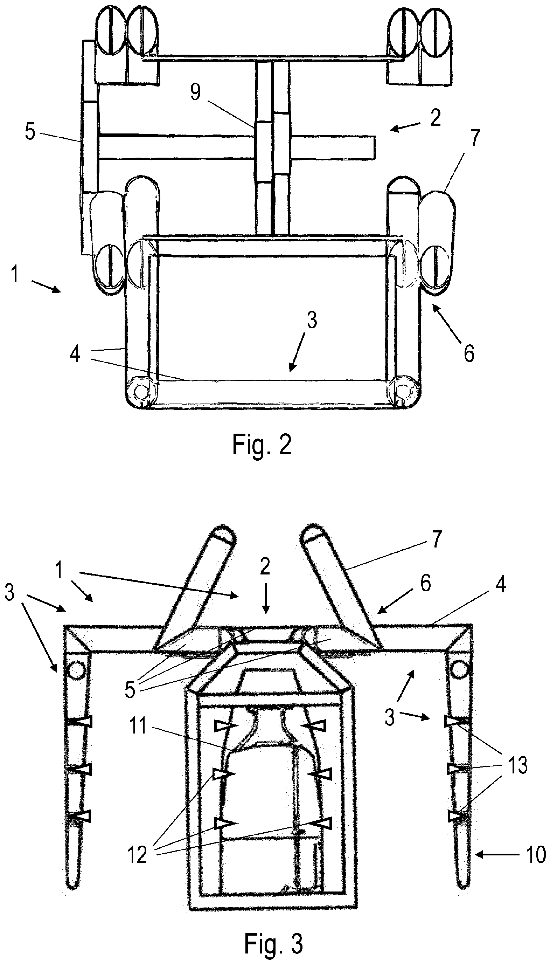

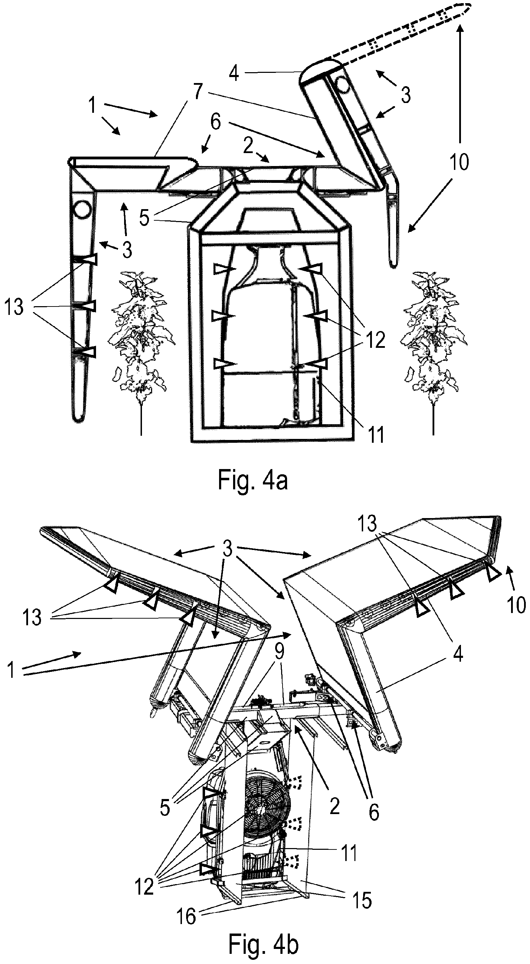

Figur 1a zeigt eine erste Ausführungsvariante der erfindungsgemäßen Vorrichtung 1 zur Vermeidung von Sprühnebelabdrift und/oder zum Auffangen und Recyceln von Pflanzenschutzbrühe in einer schematischen Seitenansicht mit einer Tragestruktur 2 und einem Auffangschirm 3, welcher mit der Tragestruktur 2 verbunden ist. Figur 1b zeigt eine zweite Ausführungsvariante der erfindungsgemäßen Vorrichtung. Die erfindungsgemäße Vorrichtung 1 kann in allen Ausführungsvarianten anstatt des, oder zusätzlich zu dem Auffangschirm 3 in Figur 3 und Figur 4a dargestellte Sprühdüsen 13 umfassen, welche mit der Tragestruktur 2 verbunden sind. Die Tragestruktur 2 besteht zumindest teilweise aus einer Aufblasstruktur 4, die beispielsweise aus einem Kunststoff ähnlich einer aufblasbaren verstärkten Luftmatratze mit zum Beispiel einer Luftkammer gebildet sein kann. Des Weiteren umfasst die Tragestruktur 2 in der in Figur 1a dargestellten ersten Ausführungsvariante, sowie in der in Figur 1b dargestellten zweiten Ausführungsvariante eine stabile, beispielsweise aus Metall gefertigte Befestigungsstruktur 5. Der Auffangschirm 3 und/ oder die Sprühdüsen 13 sind an der Aufblasstruktur 4 befestigt. Der Auffangschirm 3 kann beispielsweise in Form einer Kunststofffolie bereitgestellt sein. Sind nur Sprühdüsen 13 und kein Auffangschirm 3 an der erfindungsgemäßen Vorrichtung 1 vorgesehen, dann wird die Aufblasstruktur 4 gemäß einer Ausführungsvariante nicht als geschlossener Rahmen ausgeführt, sondern umfasst nur einen oder mehrere Balken, an welchem oder an welchen die Sprühdüsen 13 befestigt sind.

Die erfindungsgemäße Vorrichtung 1 umfasst ein Gelenk 6. Das Gelenk 6 ist vorzugsweise mit der Tragestruktur 2 verbunden und umfasst in der zweiten Ausführungsvariante der erfindungsmäßen Vorrichtung beispielsweise einen Hydraulikzylinder, einen Pneumatikzylinder, einen elektronischen Aktor oder einen Drehantrieb. Das Gelenk 6 ist in der zweiten Ausführungsvariante als mechanisches Gelenk 6 ausgeführt. Hierdurch wird der Vorteil erreicht, dass ein beliebiger Schwenkwinkel von dem Gelenk 6 bereitgestellt werden kann, und das Gelenk 6 mit kostengünstigen, am Markt weit verbreiteten Komponenten konstruiert werden kann. Das Gelenk 6 weist vorzugsweise einen Schwenkwinkel von zwischen 45° und 290° auf, wobei die Schwenkzeit für 45° als Teil des Gesamtschwenkwinkels zwischen 0,2 Sekunden und 6 Sekunden beträgt. Die in Figur 1a dargestellte erste Ausführungsvariante der erfindungsgemäßen Vorrichtung 1 umfasst je Seite ein Gelenk 6 in Form eines pneumatischen Gelenks 6 mit einer Hebestruktur 7. Als pneumatisches Gelenk 6 wird im Rahmen dieser Beschreibung der erfindungsgemäßen Vorrichtung 1 ein durch lokales Abknicken der Aufblasstruktur 4 realisiertes Gelenk 6 angesehen, und nicht ein in Figur 1b dargestelltes, herkömmliches, mechanisches Gelenk 6, welches in der Regel durch eine Nabe und eine Achse gebildet ist. Der Auffangschirm 3 und/oder die Sprühdüsen 13 sind an dem Gelenk 6 beziehungsweise dem pneumatischen Gelenk 6 zwischen einer, in den Figuren 1a und 1b bis 3, 5 und 6 dargestellten Auffangbetriebslage beziehungsweise Sprühbetriebslage und einer in Figur 4a auf der rechten Seite und Figur 4b beiderseits dargestellten Wendebetriebslage schwenkbar gelagert. In der Auffangbetriebslage ist der Auffangschirm 3 zum Auffangen der Pflanzenschutzbrühe positioniert. In der Sprühbetriebslage sind die Sprühdüsen 13 zum Sprühen der Pflanzenschutzbrühe positioniert. In der Wendebetriebslage sind der Auffangschirm 3 und/oder die Sprühdüsen 13 in Relation zur Auffangbetriebslage beziehungsweise Sprühbetriebslage angehoben. In der Auffangbetriebslage ist der Teil des Auffangschirmes 3, der am unteren Ende im Auffangsumpf endet, beispielsweise Normal auf eine Ausbringungsrichtung der Pflanzenschutzbrühe angeordnet. In der Wendebetriebslage sind der Auffangschirm 3 und/oder die Sprühdüsen 13 mittels des Gelenks 6 beziehungsweise des pneumatischen Gelenks 6 angehoben positioniert, sodass der Auffangschirm 3 und/oder die Sprühdüsen 13 im Wesentlichen vollständig über einer Bewuchshöhe von zu besprühenden Pflanzen angehoben sind. Auf der rechten Seite der Figur 4a ist beispielhaft ein Auffangschirm 3 der erfindungsgemäßen Vorrichtung 1 in Wendebetriebslage dargestellt. Figur 4a zeigt zwei verschiedene Ausführungsvarianten der Wendebetriebslage, wobei in der Regel die strichliert dargestellte Positionierung des Auffangschirms 3 die bevorzugte Ausführungsvariante der Wendebetriebslage darstellt. Hierdurch wird der Vorteil erreicht, dass die Vorrichtung 1 einen geringen Platzbedarf für Wendemanöver aufweist. Die in Figur 4a nicht strichliert, sondern mit durchgehenden Linien dargestellte Betriebsvariante der Wendebetriebslage wird durch ein Druckablassen beziehungsweise zusätzliches Druckablassen aus der Aufblasstruktur 4 erreicht. In der Ausführungsvariante mit dem mechanischem Gelenk 6 oder dem pneumatischen Gelenk 6, kann diese Ausführungsvariante der Wendebetriebslage erreicht werden, indem ein in den Figuren nicht dargestelltes Halteelement an der erfindungsgemäßen Vorrichtung 1 vorgesehen ist, welches die Aufblasstruktur 4 zumindest an einem Punkt entlang der Aufblasstruktur 4 in der Wendebetriebslage fixiert. Beispielsweise kann das Halteelement mit der Tragestruktur 2 verbunden sein. Im Anschluss kann ein Erschlaffen der Aufblasstruktur 4 durch eine Reduktion des Drucks in der Aufblasstruktur 4 erreicht werden. Gemäß einer alternativen Ausführungsvariante der erfindungsgemäßen Vorrichtung mit zwei gegenüberliegenden Aufblasstrukturen 4 kann das Halteelement auch an zumindest einer der Aufblasstrukturen 4 vorgesehen sein, wobei das Halteelement dazu ausgebildet ist die Aufblasstrukturen 4 in der Wendebetriebslage aneinander zu fixieren, wobei der Druck in einer der Aufblasstrukturen 4 im Anschluss reduziert werden kann. Das Halteelement kann beispielsweise als Klettverschluss oder Magnetverschluss ausgeführt sein.

Durch die Ausführung der Tragestruktur 2 zumindest teilweise als Aufblasstruktur 4 wird die Möglichkeit geschaffen, bei der Ausführung der erfindungsgemäßen Vorrichtung 1 mit dem pneumatischen Gelenk 6, die Aufblasstruktur 4 mittels der Hebestruktur 7 zu verformen, wodurch eine Schwenkbewegung des pneumatischen Gelenks 6 eingeleitet wird. Hierbei wird die Aufblasstruktur 4 durch die Hebestruktur 7 bei einem Schwenken des Auffangschirms 3 beziehungsweise der Sprühdüsen 13 in die Wendebetriebslage verformt. Hierdurch wird der Vorteil erreicht, dass eine Schwenkfunktion des Auffangschirms 3 und/oder der Sprühdüsen 13 bereitgestellt wird, ohne Verwendung eines vollständig aus Metall, Hartplastik, Holz, oder ähnlichen steifen und vergleichbar schweren Materialien gefertigten Gelenks 6. Hierdurch wird der Vorteil erreicht, dass das Systemgewicht der erfindungsgemäßen Vorrichtung 1 wesentlich reduziert wird.

Figur 4b zeigt eine perspektivische Darstellung von zwei gegenüberliegenden erfindungsgemäßen Vorrichtungen 1 in der zweiten Ausführungsvariante gemäß Figur 1b mit dem Gelenk 6, in einer beiderseitigen Wendebetriebslage. Die Aufblasstruktur 4 wird hierbei in der Regel nicht verformt, und das Gelenk 6 erzeugt eine Schwenkbewegung der Aufblasstruktur 4.

Gemäß einer weiteren Ausführungsvariante umfasst die Hebestruktur 7 des pneumatischen Gelenks 6 einen mit der Aufblasstruktur 4 verbundenen Aktor, anstatt eines aufblasbaren Aktors, welcher in den Figuren nicht dargestellt ist. Dieser Aktor ist dazu ausgebildet die Aufblasstruktur 4 in der Wendebetriebslage zu verformen. Dieser Aktor kann beispielsweise einen Seilzug, einen Gummizug oder ein Gestänge umfassen. Der Seilzug oder das Gestänge sind vorzugsweise von einem Elektromotor, einem Hydraulikzylinder oder Ähnlichem angetrieben. Weitere Ausführungsmöglichkeiten von Aktoren sind dem Fachmann auf dem Gebiet des Maschinenbaus allgemein bekannt. Hierdurch wird der Vorteil bereitgestellt, dass ein besonders einfach zu konstruierendes, verlässliches und mit am Markt in großen Stückzahlen verfügbaren Komponenten aufgebautes pneumatisches Gelenk 6 bereitgestellt wird. Umfasst der Aktor einen Gummizug wird die Aufblasstruktur 4 bei einer Reduktion eines Drucks in der Aufblasstruktur 4 durch eine mittels einer Vorspannung des Gummizugs aufgebrachten Kraft verformt. Zur Regelung des Drucks in der Aufblasstruktur 4 kann zusätzlich eine Druckeinrichtung, wie beispielsweise ein steuerbares Ventil, ein Kompressor oder ein Druckreservoir vorgesehen sein. Hierdurch werden der Auffangschirm 3 beziehungsweise die Sprühdüsen 13 von der Auffangbetriebslage beziehungsweise der Sprühbetriebslage in die Wendebetriebslage geschwenkt. Bei einer Erhöhung des Drucks in der Aufblasstruktur 4 nimmt die Aufblasstruktur 4 wiederum ihre ursprüngliche Form an und der Auffangschirm 3 beziehungsweise die Sprühdüsen 13 schwenken in die Sprühbetriebslage beziehungsweise die Auffangbetriebslage. Hierdurch wird ein besonders simpel aufgebautes, kostengünstiges und widerstandsfähiges pneumatisches Gelenk 6 bereitgestellt. Der Gummizug kann ebenfalls wie oben beschrieben angetrieben sein.

Gemäß der bevorzugten Ausführungsvariante der Vorrichtung 1 ist die Hebestruktur 7 des pneumatischen Gelenks 6 aufblasbar, wobei die Aufblasstruktur 4 und die Hebestruktur 7 als aufblasbare Formkörper bereitgestellt sind. Das pneumatisches Gelenk 6 basiert in einer bevorzugten Ausführungsvariante auf einer veränderbaren Steifigkeit der Aufblasstruktur 4 und/oder der Hebestruktur 7. Entweder werden die Steifigkeiten der Aufblasstruktur 4 oder der Hebestruktur 7 verändert, oder es werden die Steifigkeiten sowohl der Aufblasstruktur 4 als auch der Hebestruktur 7 verändert.

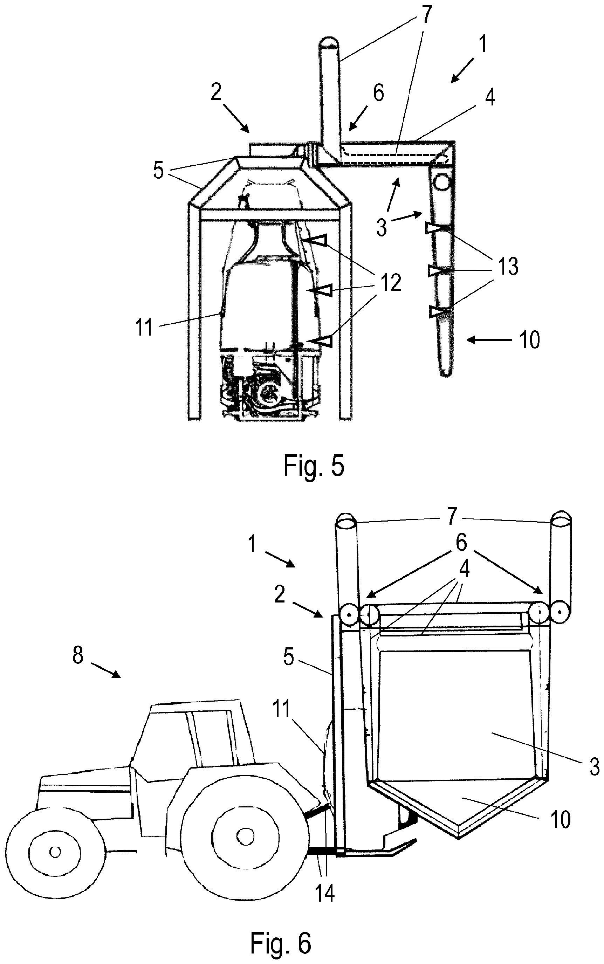

Die Hebestruktur 7 des pneumatischen Gelenks 6 hebt sich in einer bevorzugten Ausführungsvariante, wie in Figur 3 dargestellt, in einem aufgeblasenen Zustand ausgehend von der Befestigungsstruktur 5 beziehungsweise der Tragestruktur 2 in einem spitzen, stumpfen oder rechten Winkel von der Aufblasstruktur 4 ab. Die Hebestruktur 7 des pneumatischen Gelenks 6 ist mit dem Auffangschirm 3 direkt oder indirekt über die Aufblasstruktur 4 an einem der Befestigungsstruktur 5 gegenüberliegenden Ende verbunden. In den Figuren 1a, 2, 3, 5 und 6 ist sowohl die Aufblasstruktur 4 als auch die Hebestruktur 7 des pneumatischen Gelenks 6 im aufgeblasenen Zustand und nicht miteinander verbunden dargestellt. Hierbei ist die Hebestruktur 7 nur für Verständniszwecke, und um die Verläufe der beiden Strukturen zu illustrieren von der Aufblasstruktur 4 abgehoben dargestellt. In Figur 4a sind zwei gegenüberliegende Vorrichtungen 1 mit zwei Auffangschirmen 3 sowie beidseitig angeordneten Sprühdüsen 13 dargestellt. Des Weiteren ist ein Sprühgerät 11 dargestellt, welches Sprühgerätdüsen 12 zum Sprühen von Pflanzenschutzbrühe aufweist. Im Betrieb, ist die Hebestruktur 7 des pneumatischen Gelenks 6, wie in Figur 4a dargestellt, direkt oder indirekt mit der Aufblasstruktur 4 an einem der Befestigungsstruktur 5 gegenüberliegenden Ende verbunden. Hierbei befindet sich das pneumatische Gelenk 6 entweder in der Auffangbetriebslage beziehungsweise der Sprühbetriebslage, wie auf der linken Seite in Figur 4a dargestellt, oder in der Wendebetriebslage, welche auf der rechten Seite in Figur 4a dargestellt ist. In der Auffangbetriebslage beziehungsweise der Sprühbetriebslage ist in der bevorzugten Ausführungsvariante der Vorrichtung 1 durch eine geringere Steifigkeit der Hebestruktur 7 des pneumatischen Gelenks 6, im Vergleich zur Aufblasstruktur 4, der Verlauf der Hebestruktur 7 durch den Verlauf der Aufblasstruktur 4 bestimmt. In der Wendebetriebslage ist durch eine im Vergleich zur Hebestruktur 7 des pneumatischen Gelenks 6 geringere Steifigkeit der Aufblasstruktur 4 der Verlauf der Aufblasstruktur 4 durch den Verlauf der Hebestruktur 7 bestimmt. Hierdurch wir der Vorteil erreicht, dass ein simples, verlässliches, und vor allem leichtes pneumatisches Gelenk 6 bereitgestellt wird, welches das Gewicht der Vorrichtung 1 nur in einem geringen Umfang erhöht. Die erfindungsgemäße Vorrichtung 1 weist hierdurch im Vergleich zu Vorrichtungen gemäß dem Stand der Technik ein wesentlich geringeres Gewicht auf. Aufgrund dessen eignet sich die erfindungsgemäße Vorrichtung 1 sowohl für den Einsatz in schwerem Gelände als auch für den Einsatz bei beengten Platzverhältnissen. Je nach Dimensionierung der erfindungsgemäßen Vorrichtung 1 ist beispielsweise ein Vorgewende von 3m für einen Wendevorgang ausreichend. Besonders vorteilhaft ist, dass die Vorrichtung 1 im Vergleich zum Stand der Technik mit einem, in Figur 6 dargestellten, Fahrzeug 8 mit eingeschränkter Zugleistung oder Tragleistung eingesetzt werden kann.

Gemäß einer Ausführungsvariante der erfindungsgemäßen Vorrichtung 1 weist das pneumatische Gelenk 6 eine in den Figuren nicht dargestellte Druckeinrichtung zur Änderung des Drucks, insbesondere des Luftdrucks entweder in der Hebestruktur 7 und/oder in der Aufblasstruktur 4, oder zur Änderung des Luftdrucks sowohl in der Hebestruktur 7 als auch in der Aufblasstruktur 4 auf. Alternativ können die Hebestruktur 7 und die Aufblasstruktur 4 mit jedem anderen geeigneten Gas gefüllt sein. Die Druckeinrichtung kann beispielsweise in Form eines Kompressors oder eines Druckreservoirs bereitgestellt sein. Das pneumatische Gelenk 6 schwenkt den Auffangschirm 3 und/oder die Sprühdüsen 13 durch Erhöhung des Drucks in der Hebestruktur 7 von der Auffangbetriebslage beziehungsweise der Sprühbetriebslage in die Wendebetriebslage. Gemäß einer alternativen Ausführungsvariante der erfindungsgemäßen Vorrichtung 1 wird hierbei auch der Druck in der Aufblasstruktur 4 vermindert. Durch die beschriebene Änderung der Druckverhältnisse in dem pneumatischen Gelenk 6 wird die Steifigkeit der Hebestruktur 7 erhöht und gegebenenfalls die Steifigkeit der Aufblasstruktur 4 verringert. Alternativ wird die Steifigkeit der Aufblasstruktur 4 variiert und jene der Hebestruktur 7 konstant gehalten. Der Verlauf der Aufblasstruktur 4 wird in der Wendebetriebslage durch den Verlauf der Hebestruktur 7 bestimmt. Hierdurch wird der Vorteil erreicht, dass die Bewegung des pneumatischen Gelenks 6 vollständig ohne bewegte mechanische Elemente wie beispielsweise Roll- oder Gleitlager realisiert wird. Hierdurch wird das Gewicht der erfindungsgemäßen Vorrichtung 1 weiter reduziert. Das pneumatische Gelenk 6 schwenkt des Weiteren durch Verminderung des Drucks in der Hebestruktur 7 und gegebenenfalls Erhöhung des Drucks in der Aufblasstruktur 4 den Auffangschirm 3 und/oder die Sprühdüsen 13 von der Wendebetriebslage in die Auffangbetriebslage beziehungsweise in die Sprühbetriebslage. Durch diese Veränderung der Druckverhältnisse wird die Steifigkeit der Aufblasstruktur 4 gegebenenfalls erhöht und die Steifigkeit der Hebestruktur 7 verringert. Der Verlauf der Hebestruktur 7 wird in Folge dessen in der Auffangbetriebslage durch den Verlauf der Auffangstruktur 4 bestimmt. Hierdurch wird der Vorteil erreicht, dass durch eine einfache Umkehr der Druckverhältnisse eine erneute Absenkung des Auffangschirms 3 in von der Wendebetriebslage in die Auffangbetriebslage realisiert wird. In der in Figur 4a mit durchgezogenen Linien dargestellten Ausführungsvariante der Wendebetriebslage wurde der Druck in der Aufblasstruktur 4 abgesenkt. Hierdurch erschlafft die Aufblasstruktur 4. Im Betrieb der erfindungsgemäßen Vorrichtung 1 wird der Druck in der Aufblasstruktur 4, wie in Figur 4a strichliert dargestellt, in der Regel nicht, oder nur teilweise reduziert, sodass sich die Aufblasstruktur 4 mit dem daran befestigten Auffangschirm 3 und/oder den daran befestigten Sprühdüsen 13 in einem Winkel von der Hebestruktur 7 abhebt. Mittels einer Steuerung des Drucks in der Aufblasstruktur 4 durch die Druckeinrichtung kann gemäß einer alternativen Ausführungsvariante der erfindungsgemäßen Vorrichtung 1 der Winkel zwischen der Aufblasstruktur 4 und der Hebestruktur 7 in der Wendebetriebslage beeinflusst werden. Wie in Figur 4a dargestellt, kann eine Druckeinrichtung die Aufblasstruktur 4 und die Hebestruktur 7 von zwei gegenüberliegenden Vorrichtungen 1 unabhängig voneinander steuern.

Gemäß einer alternativen Ausführungsvariante umfasst das pneumatische Gelenk 6 eine, in den Figuren nicht dargestellte, Einschnüreinheit. Die Einschnüreinheit schnürt den aufgeblasenen Querschnitt der Aufblasstruktur 4 ein. Schnürt die Einschnüreinheit den aufgeblasenen Querschnitt der Aufblasstruktur 4 ein, wird die Steifigkeit der Aufblasstruktur 4 im Vergleich zur Hebestruktur 7 reduziert. Der Verlauf der Aufblasstruktur 4 wird aufgrund dessen durch den Verlauf der Hebestruktur 7 bestimmt, welche gemäß einer Ausführungsvariante der erfindungsgemäßen Vorrichtung 1 aufblasbar ist. In einer alternativen Ausführungsvariante kann die Hebestruktur 7 durch eine mechanische Vorrichtung, wie beispielsweise einen Seilzug oder ein Gestänge bereitgestellt sein, welches den Verlauf der eingeschnürten Aufblasstruktur 4 bestimmt, und/oder eine Kraft auf die eingeschnürte Aufblasstruktur 4 aufbringt. Durch Einschnüren der Aufblasstruktur 4 schwenkt das pneumatische Gelenk 6 den Auffangschirm 3 und/oder die Sprühdüsen 13 von der Auffangbetriebslage beziehungsweise der Sprühbetriebslage in die Wendebetriebslage. Gemäß einer alternativen Ausführungsvariante der erfindungsgemäßen Vorrichtung 1 schnürt die Einschnüreinheit den aufgeblasenen Querschnitt der Hebestruktur 7 ein. Schnürt die Einschnüreinheit den aufgeblasenen Querschnitt der Hebestruktur 7 ein, wird die Steifigkeit der Hebestruktur 7 im Vergleich zur Aufblasstruktur 4 reduziert. Der Verlauf der Hebestruktur 7 wird aufgrund dessen durch den Verlauf der Aufblasstruktur 4 bestimmt. Durch Einschnüren der Hebestruktur 7 schwenkt das pneumatische Gelenk 6 den Auffangschirm 3 und/oder die Sprühdüsen 13 von der Wendebetriebslage in die Auffangbetriebslage beziehungsweise die Sprühbetriebslage. In einer weiteren alternativen Ausführungsvariante der erfindungsgemäßen Vorrichtung 1 schnürt die Einschnüreinheit den aufgeblasenen Querschnitt der Hebestruktur 7 und der Aufblasstruktur 4 selektiv ein. Hierbei schürt die Einschnüreinheit entweder den aufgeblasenen Querschnitt der Aufblasstruktur 4 oder den aufgeblasenen Querschnitt der Hebestruktur 7 ein. Durch Einschnüren der Hebestruktur 7 oder der Aufblasstruktur 4 schwenkt das pneumatische Gelenk 6 den Auffangschirm 3 und/oder die Sprühdüsen 13 zwischen der Auffangbetriebslage beziehungsweise der Sprühbetriebslage und der Wendebetriebslage. Die Einschnüreinheit kann beispielsweise als ein oder zwei mit einem oder zwei Stellmotoren verbundene Seilzüge realisiert sein, welche je nach Ausführungsvariante um die Aufblasstruktur 4 und/oder die Hebestruktur 7 geführt sind. Hierdurch wird der Vorteil erreicht, dass eine besonders einfache Methode zur Veränderung der Steifigkeit der Hebestruktur 7 und der Auffangstruktur 4 bereitgestellt wird, welche ohne eine unmittelbare Änderung der Druckverhältnisse realisiert wird.

Es kann in der erfindungsgemäßen Vorrichtung 1 gemäß der ersten Ausführungsvariante mit dem pneumatischen Gelenk 6 auch die Einschnüreinheit durch eine Eindrückeinheit ersetzt sein, welche in den Figuren nicht dargestellt ist. Die Eindrückeinheit drückt hierbei den aufgeblasenen Querschnitt der Aufblasstruktur 4, der Hebestruktur 7 oder der Aufblasstruktur 4 und der Hebestruktur 7 ein, wodurch analog zur Einschnüreinheit eine Änderung der Steifigkeit der Aufblasstruktur 4 oder der Hebestruktur 7 bewirkt wird. Die Eindrückeinheit kann beispielsweise durch einen Hydraulikzylinder gebildet sein. Gemäß einer alternativen Ausführungsvariante ist die Eindrückeinheit ebenfalls aufblasbar, und liegt beispielsweise als aufblasbarer Formkörper vor. Beispielsweise bewirkt ein Eindrücken der Aufblasstruktur 4, dass das pneumatische Gelenk 6 um einen Winkel von im Wesentlichen 45° abknickt. Gemäß einer Ausführungsvariante der erfindungsgemäßen Vorrichtung 1 ist die Hebestruktur 7 aufblasbar. In einer alternativen Ausführungsvariante kann die Hebestruktur 7 durch eine mechanische Vorrichtung, wie beispielsweise einen Seilzug oder ein Gestänge bereitgestellt sein, welches den Verlauf der eingedrückten Aufblasstruktur 4 bestimmt, und/oder eine Kraft auf die eingedrückte Aufblasstruktur 4 aufbringt.

In den Figuren 1a, 2 bis 4a und 6 sind die Aufblasstruktur 4 und die Hebestruktur 7 als zwei verschiedene aufblasbare Formkörper dargestellt, welche im Betrieb aneinander anliegend positioniert sind. Gemäß einer in Figur 5 dargestellten Ausführungsvariante der erfindungsgemäßen Vorrichtung 1 ist die Hebestruktur 7 von der Aufblasstruktur 4 zumindest teilweise umschlossen. Die Hebestruktur 7 liegt in dieser Ausführungsvariante abschnittsweise innerhalb der Aufblasstruktur 4, und führt aus dem Inneren der Aufblasstruktur 4 nach außen. Gemäß einer alternativen Ausführungsvariante ist die Aufblasstruktur 4 zumindest teilweise von der Hebestruktur 7 umschlossen. Hierdurch wird der Vorteil erreicht, dass der Platzbedarf des pneumatischen Gelenks 6 wesentlich reduziert wird. Gemäß einer weiteren Ausführungsvariante liegt die Hebestruktur 7 im Wesentlichen vollständig innerhalb der Aufblasstruktur 4, wie in Figur 5 mit strichlierten Linien dargestellt, wobei die Hebestruktur 7 hierbei in einem Zustand mit abgelassenen Druck gezeigt ist.

Wie in Figur 2 dargestellt weist die Tragestruktur 2 gemäß der bevorzugten Ausführungsvariante der erfindungsgemäßen Vorrichtung 1 eine Verschubeinheit 9 auf. Die Verschubeinheit 9 verschiebt die Aufblasstruktur 4 mit dem daran befestigten Auffangschirm 3 und/oder den daran befestigten Sprühdüsen 13 im Wesentlichen quer zur Ausdehnung des Auffangschirms 3 beziehungsweis im Wesentlichen in Richtung der Sprühdüsen 13. Hierdurch wird der Vorteil erreicht, dass die Vorrichtung 1 im Weinbau sowohl an verschiedene Reihenweiten der Rebzeile als auch im Obstbau bei Spindelkulturen (Kern- und Beerenobst) eingesetzt werden kann. Die Verschubeinheit 9 umfasst in der bevorzugten Ausführungsvariante der erfindungsgemäßen Vorrichtung 1 einen Linearaktuator. Hierdurch wird der Vorteil erreicht, dass ein besonders widerstandsfähiger und leicht verfügbarer Bauteil für die Verschubeinheit 9 eingesetzt werden kann. Die in Figur 2 dargestellte Ausführungsvariante der erfindungsgemäßen Vorrichtung 1 weist zudem eine Vorbereitung für einen zweiten Auffangschirm 3 beziehungsweise Sprühdüsen 13 auf, welche an einer zweiten Aufblasstruktur 4 befestigt sind.

Vorzugsweise weist die Tragestruktur 2 zumindest ein im Wesentlichen rohr- oder ringförmiges Aufnahmeelement auf, welches in den Figuren nicht dargestellt ist, wobei die Aufblasstruktur 4 durch das Aufnahmeelement verläuft. Hierdurch wird die Aufblasstruktur 4 stabilisiert, wodurch die erfindungsgemäße Vorrichtung gegenüber mechanischen Belastungen verstärkt wird. Zusätzlich ist die aufgeblasene Aufblasstruktur 4 vorzugsweise in dem Aufnahmeelement eingespannt. Hierbei wird die Aufblasstruktur 4 durch aufbringen eines Innendrucks in dem Aufnahmeelement verspannt, wodurch ein fester Sitz erreicht wird. Der Druck in der Aufblasstruktur 4 liegt vorzugsweise in einem Bereich zwischen 0,05 bar und 0,5 bar. Gemäß einer Ausführungsvariante der erfindungsgemäßen Vorrichtung 1 weist das Aufnahmeelement einen Umfang mit zumindest einer Unterbrechung auf. Das Aufnahmeelement kann dabei vollständig rohr- oder ringförmig sein bzw. nur teilweise. Bei einem teilweise rohr- oder ringförmigen Aufnahmeelement ist ein zusätzliches Spannelement notwendig (zb. Spanngurt). Das Aufnahmeelement bildet in einer bevorzugten Ausführungsvariante der erfindungsgemäßen Vorrichtung 1 gleichzeitig das Halteelement, welches die Aufblasstruktur 4 zumindest an einem Punkt entlang der Aufblasstruktur 4 in der Wendebetriebslage fixiert. Durch die starre Ausführung des Aufnahmeelements wird der Verlauf der Aufblasstruktur 4 auch nach einer Reduktion des Drucks in der Aufblasstruktur 4 durch das Aufnahmeelement bestimmt. Hierdurch kann ein Erschlaffen der Aufblasstruktur 4 in der Wendebetriebslage erreicht werden, ohne dass die Aufblasstruktur 4 in Kontakt mit dem Untergrund gerät. Zudem wird hierdurch der Platzbedarf der erfindungsgemäßen Vorrichtung 1 in der Wendebetriebslage reduziert.

Gemäß der bevorzugten Ausführungsvariante umfasst der Auffangschirm 3 einen Auffangsumpf 10 an einem unteren Ende des Auffangschirms 3, welcher in Figur la dargestellt ist. Der Auffangsumpf 10 dient als Sammelstelle für auf den Auffangschirm 3 auftreffende Pflanzenschutzbrühe. Zum Recyceln der Pflanzenschutzbrühe ist der Auffangsumpf 10 mit einem, in den Figuren 3 bis 5 dargestellten, Sprühgerät 11 verbindbar, wobei die aufgefangene Pflanzenschutzbrühe, beispielsweise mit einer Förderpumpe, erneut dem Sprühgerät 11 zugeführt wird. Des Weiteren kann die aufgefangene Pflanzenschutzbrühe erneut den Sprühdüsen 13 und/oder Sprühgerätdüsen 12 zugeführt werden. Die Sprühdüsen 13 und/oder Sprühgerätdüsen 12 können gemäß einer alternativen Ausführungsvariante der erfindungsgemäßen Vorrichtung 1 von dem Sprühgerät 11 mit Pflanzenschutzbrühe versorgt werden. Hierdurch wird der Vorteil erreicht, dass die Ausbeute der Pflanzenschutzbrühe wesentlich erhöht wird.

Wie in Figur 1a und Figur 1b dargestellt, ist der Auffangschirm 3 vorzugsweise im Wesentlichen entlang der gesamten Aufblasstruktur 4 vorgesehen. Hierdurch ermöglicht der Auffangschirm 3 eine zusätzliche Abschirmung von Sprühnebelabdrift im Wesentlichen im rechten Winkel zur Ausbringungsrichtung des Sprühnebels durch die Sprühdüsen 13 beziehungsweise der Sprühgerätdüsen 12. Insbesondere ist zumindest ein Teil des Auffangschirms 3 somit in der Sprühbetriebslage im Wesentlichen parallel zu einem Untergrund unter der Vorrichtung 1 orientiert. Der Sprühnebel schlägt sich an dem Auffangschirm 3 nieder und wird entweder im Auffangsumpf 10 gesammelt und zu dem Sprühgerät 11, den Sprühgerätdüsen 12 beziehungsweise den Sprühdüsen 13 rückgeführt, oder tropft von dem Auffangschirm 3 auf die unter dem Auffangschirm 3 liegenden zu besprühenden Pflanzen.

Die Vorrichtung 1 weist vorzugsweise zudem einen in Figur 1a und Figur 1b dargestellten zweiten Auffangschirm 15 auf, welcher in der Sprühbetriebslage im Wesentlichen normal auf die Sprühdüsen 13, beziehungsweise im Wesentlichen parallel zu zumindest einem Teil des Auffangschirms 3 orientiert ist. Der zweite Auffangschirm 15 fängt überschüssige Pflanzenschutzsprühe auf, welche sich auf dem zweiten Auffangschirm 15 niederschlägt, und verhindert dass Sprühnebel in das Sprühgerät 11 gelangt. An dem zweiten Auffangschirm 15 ist eine Auffangrinne 16 vorgesehen, welche mit dem Sprühgerät 11, den Sprühgerätdüsen 12 beziehungsweise den Sprühdüsen 13 verbunden ist. Hierdurch wird der Vorteil erreicht, dass die von dem zweiten Auffangschirm 15 aufgefangene Pflanzenschutzsprühe wieder ausgebracht werden kann.

Die erfindungsgemäße Vorrichtung 1 zur Vermeidung von Sprühnebelabdrift und/oder zum Auffangen und Recyceln von Pflanzenschutzbrühe ist Teil eines landwirtschaftlichen Fahrzeugs 8 mit einem Sprühgerät 11 zum Versprühen von Pflanzenschutzbrühe. Wie in Figur 6 dargestellt, sind Sprühgeräte 11 mit dem landwirtschaftlichen Fahrzeug 8 gekoppelt, welches die Antriebsleitung für eine Fortbewegung des Sprühgeräts 11 bereitstellt. In der in Figur 6 dargestellten Ausführungsvariante ist das Sprühgerät 11 mit einer Dreipunktkupplung 14 eines Traktors verbunden. Gemäß der bevorzugten Ausführungsvariante des landwirtschaftlichen Fahrzeugs 8 ist die erfindungsgemäße Vorrichtung 1 an der Dreipunkkupplung 14 befestigt, und mit dem Sprühgerät 11 verbunden. Das Sprühgerät 11 bringt die Pflanzenschutzbrühe mit den in Figur 6 verdeckten Sprühgerätdüsen 12 in einer Ausbringrichtung im Wesentlichen normal auf eine Fahrrichtung des Fahrzeuges 8 beziehungsweise des Traktors aus. In der Auffangbetriebslage ist der Teil des Auffangschirmes 3, der am unteren Ende im Auffangsumpf 10 endet, beispielsweise Normal auf eine Ausbringungsrichtung der Pflanzenschutzbrühe angeordnet. Die in Figur 6 nicht dargestellten Sprühdüsen 13 sind in der Sprühbetriebslage in der Ausbringrichtung ausgerichtet. In der Wendeposition wird, wie in den Figuren 4a und 4b dargestellt, der Auffangschirm 3 und/oder die Sprühdüsen 13 von dem pneumatischen Gelenk 6 mittels der Hebestruktur 7 beziehungsweise von dem Gelenk 6 in der zweiten Ausführungsvariante der erfindungsgemäßen Vorrichtung angehoben. Hierdurch wird der Vorteil erreicht, dass herkömmliche Sprühgeräte 11 in Verbindung mit einer erfindungsgemäßen Vorrichtung 1 eingesetzt werden können. Hierdurch werden mit herkömmlichen Sprühgeräten 11 die Vorteile eines Tunnelsprühgeräts erreicht. Alternativ kann die Befestigungsstruktur 5, oder die Tragestruktur 2 der erfindungsgemäßen Vorrichtung 1 auch direkt am Sprühgerät 11 oder am Fahrzeug 8 befestigt werden. Gemäß der bevorzugten Ausführungsvariante des Fahrzeugs 8 sind zwei einander gegenüberliegende Vorrichtungen 1 zur Vermeidung von Sprühnebelabdrift und/oder zum Auffangen und Recyceln von Pflanzenschutzbrühe vorgesehen. Die Auffangschirme 3 der beiden Vorrichtungen 1 sind in dieser Ausführungsvariante beiderseits des Sprühgerätes 11 positioniert, wie in den Figuren 3,4a und 4b dargestellt. Hierdurch wird der Vorteil erreicht, dass zwei Reihen an Pflanzen gleichzeitig mit dem erfindungsgemäßen Fahrzeug 8 mit der erfindungsgemäßen Vorrichtung 1 besprüht werden können. Besonders vorteilhaft ist, dass hierdurch die Arbeitszeit zur Bearbeitung einer Menge an Pflanzen, durch die Bearbeitung von beispielsweise zwei Reihen von Weinreben gleichzeitig wesentlich reduziert wird.

Gemäß der bevorzugten Ausführungsvariante des Fahrzeugs 8 weist die Vorrichtung 1 eine Tragestruktur 2 auf, welche ein Nachrüsten der einen oder der beiden Vorrichtungen 1 auf dem Fahrzeug 8 mit Sprühgerät 11 ermöglicht. Die Verbindung der Tragestruktur 2 mit dem Fahrzeug 8 kann beispielsweise mittels der Dreipunkkupplung 14 eines Traktors erfolgen. Die Tragestruktur 2 verbindet das Fahrzeug 8 mit dem Sprühgerät 11 und dem Auffangschirm 3 beziehungsweise den Sprühdüsen 13. Die Tragestruktur 2 weist hierfür eine Eingriffsvorrichtung zur abnehmbaren Verbindung mit Dreipunktkupplungen 14 auf. Eingriffsvorrichtungen für Dreipunktkupplungen 14 sind dem Fachmann auf dem Gebiet der industriellen Landwirtschaft hinreichend bekannt. Alternativ kann die erfindungsgemäße Vorrichtung 1 direkt auf dem Sprühgerät 11 aufgebaut werden, oder auch als selbstfahrender Wagen gezogen werden.

Die erfindungsgemäße Vorrichtung 1 zur Vermeidung von Sprühnebelabdrift und/oder zum Auffangen und Recyceln von Pflanzenschutzbrühe erlaubt Obst- und Wienbaubetrieben die Weiterverwendung vorhandener Sprühgeräte 11. Zur Erfüllung von Umweltanforderungen muss nicht in ein neues, kostenintensives Tunnelsprühgerät investiert werden. Hierdurch wird des Weiteren der Vorteil erreicht, dass erstmalig auch an Hanglagen eine umweltfreundliche Ausbringung von Pflanzenschutzmitteln ermöglicht wird.

Es kann erwähnt werden, dass der Druck in der Aufblasstruktur 4 in der Wendebetriebslage derart verändert werden kann, dass damit die Höhe der Aufblasstruktur 4 beeinflusst beziehungsweise festgelegt wird. Die fest aufgeblasene steife Hebestruktur 7 des pneumatischen Gelenks 6 oder alternativ ein Gummizug oder Seilzug o.ä. erzeugt eine Kraft nach oben, die die Aufblasstruktur 4 und den daran befestigten Auffangschirm 3 nach oben zieht. Die teilweise aufgeblasene Aufblasstruktur 4 erschlafft, wodurch der an dieser befestigte Auffangschirm 3 nach unten gezogen wird. Je geringer der Druck in der Aufblasstruktur 4 in der Wendebetriebslage ist, desto höher kann der Auffangschirm 3 durch die Hebestruktur 7 angehoben werden. Durch die Festlegung beziehungsweise Regelung des Drucks in der Aufblasstruktur 4 oder des Druckverhältnisses der Drücke in der Hebestruktur 7 und der Aufblasstruktur 4 kann die Höhe des Auffangschirms 3 in der Wendebetriebslage an die Höhe der Pflanzenreihe angepasst werden.

Alternativ kann auch der Druck in der Aufblasstruktur 4 nicht direkt verändert, sondern nur der Druck in der Hebestruktur 7 des pneumatischen Gelenks 6 verändert werden, um ein Schwenken von der Auffangbetriebslage in die Wendebetriebslage zu bewirken.

In der zweiten Ausführungsvariante der erfindungsgemäßen Vorrichtung 1 mit dem Gelenk 6 kann die Höhe der Vorrichtung 1 in der Wendebetriebslage durch eine entsprechende Ansteuerung des Gelenks 6 reguliert werden.

## Patentansprüche

1. Vorrichtung (1) zur Vermeidung von Sprühnebelabdrift und/oder zum Auffangen und Recyceln von Pflanzenschutzbrühe mit einer Tragestruktur (2) und einem mit der Tragestruktur (2) verbundenen Auffangschirm (3) und/oder mit, mit der Tragestruktur (2) verbunden Sprühdüsen (13), wobei die Tragestruktur (2) zumindest teilweise aus einer Aufblasstruktur (4) besteht und der Auffangschirm (3) und/oder die Sprühdüsen (13) an der Aufblasstruktur (4) befestigt sind,
**dadurch gekennzeichnet, dass**
die Vorrichtung (1) ein Gelenk umfasst, und der Auffangschirm (3) und/oder die Sprühdüsen (13) von dem Gelenk zwischen einer Auffangbetriebslage, zum Auffangen der Pflanzenschutzbrühe, beziehungsweise einer Sprühbetriebslage, zum Sprühen der Pflanzenschutzbrühe, und einer Wendebetriebslage, mit zur Auffangbetriebslage angehobenem Auffangschirm (3) beziehungsweise zur Sprühbetriebslage angehobenen Sprühdüsen (13), schwenkbar gelagert ist.

2. Vorrichtung gemäß Anspruch 1, **dadurch gekennzeichnet, dass** das Gelenk einen Hydraulikzylinder, einen Pneumatikzylinder, einen elektromechanischen Aktor oder einen Drehantrieb umfasst.

3. Vorrichtung (1) gemäß einem der Ansprüche 1 oder 2, **dadurch gekennzeichnet, dass** die Vorrichtung ein Halteelement umfasst, welches die Aufblasstruktur (4) zumindest an einem Punkt entlang der Aufblasstruktur (4) in der Wendebetriebslage fixiert, wobei die Vorrichtung (1) dazu ausgebildet ist in der Wendebetriebslage ein Druck in der Aufblasstruktur (4) zu reduzieren.

4. Vorrichtung (1) gemäß Anspruch 1, **dadurch gekennzeichnet, dass** das Gelenk ein pneumatisches Gelenk (6) mit einer Hebestruktur (7) ist.

5. Vorrichtung (1) gemäß Anspruch 4, **dadurch gekennzeichnet, dass** die Hebestruktur (7) einen mit der Aufblasstruktur (4) verbundenen Aktor umfasst, wobei der Aktor dazu ausgebildet ist die Aufblasstruktur (4) in die Wendebetriebslage zu verformen.

6. Vorrichtung (1) gemäß Anspruch 4, **dadurch gekennzeichnet, dass** die Hebestruktur (7) aufblasbar ist, und dass das pneumatische Gelenk (6) auf einer veränderbaren Steifigkeit der Hebestruktur (7) und/oder der Aufblasstruktur (4) basiert.

7. Vorrichtung (1) gemäß Anspruch 6, **dadurch gekennzeichnet, dass** das pneumatische Gelenk (6) eine Druckeinrichtung zur Änderung des Drucks, insbesondere des Luftdrucks in der Aufblasstruktur (4) und/oder der Hebestruktur (7) aufweist und, dass das pneumatische Gelenk (6) durch Erhöhung des Drucks in der Hebestruktur (7) und/oder Verminderung eines Drucks in der Aufblasstruktur (4) zum Schwenken des Auffangschirms (3) und/oder der Sprühdüsen (13) von der Auffangbetriebslage beziehungsweise der Sprühbetriebslage in die Wendebetriebslage ausgebildet ist.

8. Vorrichtung (1) gemäß Anspruch 7, **dadurch gekennzeichnet, dass** das pneumatische Gelenk (6) durch Verminderung des Drucks in der Hebestruktur (7) und/oder Erhöhung des Drucks in der Aufblasstruktur (4) zum Schwenken des Auffangschirms (3) und/oder der Sprühdüsen (13) von der Wendebetriebslage in die Auffangbetriebslage beziehungsweise in die Sprühbetriebslage ausgebildet ist.

9. Vorrichtung (1) gemäß Anspruch 4, **dadurch gekennzeichnet, dass** das pneumatische Gelenk (6) eine Einschnüreinheit umfasst, wobei die Einschnüreinheit zum Einschnüren des aufgeblasenen Querschnitts der Aufblasstruktur (4) vorgesehen ist und, dass das pneumatische Gelenk (6) durch Einschnüren der Aufblasstruktur (4) zum Schwenken des Auffangschirms (3) und/oder der Sprühdüsen (13) von der Auffangbetriebslage beziehungsweise der Sprühbetriebslage in die Wendebetriebslage ausgebildet ist.

10. Vorrichtung (1) gemäß einem der Ansprüche 6 oder 9, **dadurch gekennzeichnet, dass** das pneumatische Gelenk (6) eine Einschnüreinheit umfasst, wobei die Einschnüreinheit zum Einschnüren des aufgeblasenen Querschnitts der Hebestruktur (7) vorgesehen ist und, dass das pneumatische Gelenk (6) durch Einschnüren der Hebestruktur (7) zum Schwenken des Auffangschirms (3) und/oder der Sprühdüsen (13) von der Wendebetriebslage in die Auffangbetriebslage beziehungsweise in die Sprühbetriebslage ausgebildet ist.

11. Vorrichtung (1) gemäß Anspruch 4, **dadurch gekennzeichnet, dass** das pneumatische Gelenk (6) eine Eindrückeinheit umfasst, wobei die Eindrückeinheit zum Eindrücken des aufgeblasenen Querschnitts der Aufblasstruktur (4) vorgesehen ist und, dass das pneumatische Gelenk (6) durch Eindrücken der Aufblasstruktur (4) zum Schwenken des Auffangschirms (3) und/oder der Sprühdüsen (13) von der Auffangbetriebslage beziehungsweise der Sprühbetriebslage in die Wendebetriebslage ausgebildet ist.

12. Vorrichtung (1) gemäß einem der Ansprüche 6 oder 11, **dadurch gekennzeichnet, dass** das pneumatische Gelenk (6) eine Eindrückeinheit umfasst, wobei die Eindrückeinheit zum Eindrücken des aufgeblasenen Querschnitts der Hebestruktur (7) vorgesehen ist und, dass das pneumatische Gelenk (6) durch Eindrücken der Hebestruktur (7) zum Schwenken des Auffangschirms (3) und/oder der Sprühdüsen (13) von der Wendebetriebslage in die Auffangbetriebslage beziehungsweise in die Sprühbetriebslage ausgebildet ist.

13. Vorrichtung (1) gemäß einem der Ansprüche 1 bis 12, **dadurch gekennzeichnet, dass** die Tragestruktur (2) eine Verschubeinheit (9) aufweist, welche dazu ausgebildet die Aufblasstruktur (4) im Wesentlichen quer zur Ausdehnung des Auffangschirms (3), beziehungsweise im Wesentlichen in Richtung der Sprühdüsen (13) zu verschieben, wobei die Tragestruktur (2) vorzugsweise zumindest ein im Wesentlichen rohr- oder ringförmiges Aufnahmeelement aufweist, wobei die Aufblasstruktur (4) durch das Aufnahmeelement verläuft.

14. Landwirtschaftliches Fahrzeug (8) mit einem Sprühgerät (11) zum Versprühen von Pflanzenschutzbrühe, **dadurch gekennzeichnet, dass** eine Vorrichtung (1) gemäß einem der Ansprüche 1 bis 13 zur Vermeidung von Sprühnebelabdrift und/oder Auffangen und Recycling von Pflanzenschutzbrühe vorgesehen ist.

15. Fahrzeug (8) gemäß Anspruch 14, **dadurch gekennzeichnet, dass** beidseitig zum Sprühgerät (11) zwei einander gegenüberliegende Vorrichtungen (1) gemäß einem der Ansprüche 1 bis 13 vorgesehen sind.

## Claims

1. A device (1) for preventing spray drift and/or for collecting and recycling crop protection broth, having a support structure (2) and a collection screen (3) connected to the support structure (2) and/or spray nozzles (13) connected to the support structure (2), wherein the support structure (2) is comprised at least in part of an inflatable structure (4) and the collection screen (3) and/or the spray nozzles (13) are attached to the inflatable structure (4),
**characterized in that**
the device (1) comprises a hinge and that the collection screen (3) and/or the spray nozzles (13) are pivotably mounted from the hinge between an operational collecting position for collecting the crop protection broth or an operational spraying position for spraying the crop protection broth, respectively, and an operational turning position with the collection screen (3) being lifted into the operational collection position or the spray nozzles (13) being lifted into the operational spraying position, respectively.

2. A device according to claim 1, **characterized in that** the hinge comprises a hydraulic cylinder, a pneumatic cylinder, an electro-mechanical actuator or a rotary drive.

3. A device (1) according to any of claims 1 or 2, **characterized in that** the device comprises a holding element, which fixes the inflatable structure (4) at least at one point along the inflatable structure (4) in the operational turning position, wherein the device (1) is configured to reduce a pressure within the inflatable structure (4) in the operational turning position.

4. A device (1) according to claim 1, **characterized in that** the hinge is a pneumatic hinge (6) having a lifting structure (7).

5. A device (1) according to claim 4, **characterized in that** the lifting structure (7) comprises an actuator connected to the inflatable structure (4), wherein the actuator is configured to deform the inflatable structure (4) into the operational turning position.

6. A device (1) according to claim 4, **characterized in that** the lifting structure (7) is inflatable and that the pneumatic hinge (6) is based on a variable rigidity of the lifting structure (7) and/or of the inflatable structure (4).

7. A device (1) according to claim 6, **characterized in that** the pneumatic hinge (6) has a pressure device for changing the pressure, in particular the air pressure, within the inflatable structure (4) and/or the lifting structure (7) and that the pneumatic hinge (6), by way of increasing the pressure within the lifting structure (7) and/or reducing a pressure within the inflatable structure (4), is configured to pivot the collection screen (3) and/or the spray nozzles (13) from the operational collecting position or the operational spraying position, respectively, into the operational turning position.

8. A device (1) according to claim 7, **characterized in that** the pneumatic hinge (6), by way of reducing the pressure within the lifting structure (7) and/or increasing the pressure within the inflatable structure (4), is configured to pivot the collection screen (3) and/or the spray nozzles (13) from the operational turning position into the operation collecting position or into the operational spraying position, respectively.

9. A device (1) according to claim 4, **characterized in that** the pneumatic hinge (6) comprises a constriction unit, wherein the constriction unit is provided for constricting the inflated cross-section of the inflatable structure (4), and that the pneumatic hinge (6), by way of constricting the inflatable structure (4), is configured to pivot the collection screen (3) and/or the spray nozzles (13) from the operational collecting position or the operational spraying position, respectively, into the operational turning position.

10. A device (1) according to any of the claims 6 or 9, **characterized in that** the pneumatic hinge (6) comprises a constriction unit, wherein the constriction unit is provided for constricting the inflated cross-section of the lifting structure (7), and that the pneumatic hinge (6), by way of constricting the lifting structure (7), is configured to pivot the collection screen (3) and/or the spray nozzles (13) from the operational turning position into the operational collecting position or the operational spraying position, respectively.

11. A device (1) according to claim 4, **characterized in that** the pneumatic hinge (6) comprises a compression unit, wherein the compression unit is provided for compressing the inflated cross-section of the inflatable structure (4), and that the pneumatic hinge (6), by way of compressing the inflatable structure (4), is configured to pivot the collection screen (3) and/or the spray nozzles (13) from the operational collecting position or the operational spraying position, respectively, into the operational turning position.

12. A device (1) according to any of the claims 6 or 11, **characterized in that** the pneumatic hinge (6) comprises a compression unit, wherein the compression unit is provided for compressing the inflated cross-section of the lifting structure (7), and that the pneumatic hinge (6), by way of compressing the lifting structure (7), is configured to pivot the collection screen (3) and/or the spray nozzles (13) from the operational turning position into the operational collecting position or into the operational spraying position, respectively.

13. A device (1) according to any of the claims 1 to 12, **characterized in that** the support structure (2) has a shifting unit (9), which is configured to shift the inflatable structure (4) substantially transversally to the extension of the collection screen (3) or substantially in the direction of the spray nozzles (13), respectively, wherein the support structure (2) preferably has a at least one substantially tubular or annular receiving element, wherein the inflatable structure (4) passes through the receiving element.

14. An agricultural vehicle (8) having a spraying device (11) for spraying crop protection broth, **characterized in that** there is provided a device (1) according to any of the claims 1 to 13 for preventing spray drift and/or for collecting and recycling crop protection broth.

15. A vehicle (8) according to claim 14, **characterized in that** there are provided at the spraying device (11), on both sides thereof, two opposing devices (1) according to any of the claims 1 to 13.

## Revendications

1. Dispositif (1) permettant d'éviter des pertes par dispersion et/ou permettant de récupérer et de recycler la bouillie de protection de plantes doté d'une structure de support (2) et d'un panneau de récupération (3) relié à la structure de support (2) et/ou de buses de pulvérisation (13) reliées à la structure de support (2), la structure de support (2) étant au moins partiellement constituée d'une structure de gonflage (4) et le panneau de récupération (3) et/ou les buses de pulvérisation (13) étant fixé(es) à la structure de gonflage (4), **caractérisé en ce que** le dispositif (1) comprend une articulation, et le panneau de récupération (3) et/ou les buses de pulvérisation (13) est (sont) monté(es) de façon pivotante à partir de l'articulation entre une position de fonctionnement en mode récupération, pour récupérer la bouillie de protection de plantes ou une position de fonctionnement en mode pulvérisation, pour pulvériser la bouillie de protection de plantes, et une position de fonctionnement en mode va-et-vient avec le panneau de récupération (3) relevé pour la position de fonctionnement en mode récupération ou avec les buses de pulvérisation (13) relevées pour la position de fonctionnement en mode pulvérisation.

2. Dispositif selon la revendication 1, **caractérisé en ce que** l'articulation comprend un vérin hydraulique, un vérin pneumatique, un actionneur électromécanique ou un entraînement rotatif.

3. Dispositif (1) selon l'une quelconque des revendications 1 ou 2, **caractérisé en ce que** le dispositif comprend un élément de retenue, ledit élément de retenue fixant la structure de gonflage (4) en au moins un point le long de la structure de gonflage (4) dans la position de fonctionnement en mode va-et-vient, le dispositif (1) présentant une configuration qui lui permet, dans la position de fonctionnement en mode va-et-vient, de réduire une pression dans la structure de gonflage (4).

4. Dispositif (1) selon la revendication 1, **caractérisé en ce que** l'articulation est une articulation pneumatique (6) dotée d'une structure de levage (7).

5. Dispositif (1) selon la revendication 4, **caractérisé en ce que** la structure de levage (7) comprend un actionneur relié à la structure de gonflage (4), l'actionneur présentant une configuration qui lui permet de déformer la structure de gonflage (4) dans la position de fonctionnement en mode va-et-vient.

6. Dispositif (1) selon la revendication 4, **caractérisé en ce que** la structure de levage (7) peut être gonflée, et **en ce que** l'articulation pneumatique (6) est basée sur une rigidité variable de la structure de levage (7) et/ou de la structure de gonflage (4).

7. Dispositif (1) selon la revendication 6, **caractérisé en ce que** l'articulation pneumatique (6) comprend un dispositif de pression qui permet de modifier la pression, en particulier la pression de l'air dans la structure de gonflage (4) et/ou dans la structure de levage (7), et **en ce que** l'articulation pneumatique (6) présente une configuration qui lui permet de faire pivoter le panneau de récupération (3) et/ou les buses de pulvérisation (13) de la position de fonctionnement en mode récupération ou de la position de fonctionnement en mode pulvérisation dans la position de fonctionnement en mode va-et-vient en augmentant la pression dans la structure de levage (7) et/ou en réduisant une pression dans la structure de gonflage (4).

8. Dispositif (1) selon la revendication 7, **caractérisé en ce que** l'articulation pneumatique (6) présente une configuration qui lui permet de faire pivoter le panneau de récupération (3) et/ou les buses de pulvérisation (13) de la position de fonctionnement en mode va-et-vient dans la position de fonctionnement en mode récupération ou dans la position de fonctionnement en mode pulvérisation en réduisant la pression dans la structure de levage (7) et/ou en augmentant la pression dans la structure de gonflage (4).

9. Dispositif (1) selon la revendication 4, **caractérisé en ce que** l'articulation pneumatique (6) comprend une unité d'étranglement, l'unité d'étranglement étant prévue pour étrangler la section transversale gonflée de la structure de gonflage (4), et **en ce que** l'articulation pneumatique (6) présente une configuration qui lui permet de faire pivoter le panneau de récupération (3) et/ou les buses de pulvérisation (13) de la position de fonctionnement en mode récupération ou de la position de fonctionnement en mode pulvérisation dans la position de fonctionnement en mode va-et-vient en étranglant la structure de gonflage (4).

10. Dispositif (1) selon l'une quelconque des revendications 6 ou 9, **caractérisé en ce que** l'articulation pneumatique (6) comprend une unité d'étranglement, l'unité d'étranglement étant prévue pour étrangler la section transversale gonflée de la structure de levage (7), et **en ce que** l'articulation pneumatique (6) présente une configuration qui lui permet de faire pivoter le panneau de récupération (3) et/ou les buses de pulvérisation (13) de la position de fonctionnement en mode va-et-vient dans la position de fonctionnement en mode récupération ou dans la position de fonctionnement en mode pulvérisation en étranglant la structure de levage (7).

11. Dispositif (1) selon la revendication 4, **caractérisé en ce que** l'articulation pneumatique (6) comprend une unité de pression, l'unité de pression étant prévue pour presser la section transversale gonflée de la structure de gonflage (4), et **en ce que** l'articulation pneumatique (6) présente une configuration qui lui permet de faire pivoter le panneau de récupération (3) et/ou les buses de pulvérisation (13) de la position de fonctionnement en mode récupération ou de la position de fonctionnement en mode pulvérisation dans la position de fonctionnement en mode va-et-vient en pressant sur la structure de gonflage (4).

12. Dispositif (1) selon l'une quelconque des revendications 6 ou 11, **caractérisé en ce que** l'articulation pneumatique (6) comprend une unité de pression, l'unité de pression étant prévue pour presser la section transversale gonflée de la structure de levage (7), et **en ce que** l'articulation pneumatique (6) présente une configuration qui lui permet de faire pivoter le panneau de récupération (3) et/ou les buses de pulvérisation (13) de la position de fonctionnement en mode va-et-vient dans la position de fonctionnement en mode récupération ou dans la position de fonctionnement en mode pulvérisation en pressant la structure de levage (7).

13. Dispositif (1) selon l'une quelconque des revendications 1 à 12, **caractérisé en ce que** la structure de support (2) présente une unité de déplacement (9), ladite unité de déplacement présentant une configuration qui lui permet de déplacer la structure de gonflage (4) sensiblement transversalement à l'étendue du panneau de récupération (3) ou sensiblement dans la direction des buses de pulvérisation (13), la structure de support (2) présentant, de préférence, au moins un élément de réception sensiblement tubulaire ou annulaire, la structure de gonflage (4) s'étendant à travers l'élément de réception.

14. Véhicule agricole (8) doté d'un dispositif de pulvérisation (11) permettant de pulvériser la bouillie de protection de plantes, **caractérisé en ce qu'**un dispositif (1) selon l'une quelconque des revendications 1 à 13 permettant d'éviter des pertes par dispersion et/ou de récupérer et de recycler la bouillie de protection de plantes est prévu.

15. Véhicule (8) selon la revendication 14, **caractérisé en ce que** deux dispositifs (1) situés en regard l'un de l'autre selon l'une quelconque des revendications 1 à 13 sont prévus de part et d'autre du dispositif de pulvérisation (11).
